# EUROPEAN PATENT APPLICATION

(11) **EP 2 326 043 A1**
(43) Date of publication of application: **25.05.2011**
(21) Application number: 09176381.3
(22) Date of filing: 18.11.2009
(51) Int. Cl.: H04L 9/08, H04L 9/32, G06F 7/58, G06F 21/00

(54) **Preventing cloning of receivers of encrypted messages**

(71) Applicant: Irdeto Access B.V., 2132 HD Hoofddorp (NL)
(72) Inventor: Dekker, Gerard, Johan, 2512 EB, Nieuw Vennep (NL)
(74) Representative: van Looijengoed, Ferry Antoin Theodorus

(57) **Abstract**

The invention provides a solution for prevent cloning and reverse engineering of receivers in a system, such as e.g. a conditional access system. An encrypted message and challenge data are sent from a transmitter to a receiver. The receiver is configured to obtain a crypto key from an integrated circuit chip comprising a physical unclonable function (PUF). The PUF is configured to generate the crypto key in response to the challenge data. The thus obtained crypto key is used by the receiver to decrypt the encrypted message.

## Description

### FIELD OF THE INVENTION

The present invention relates to systems wherein messages are transmitted in encrypted form. More specifically, the invention relates to systems, wherein measures are taken to prevent cloning and reverse engineering of receivers of encrypted messages.

### BACKGROUND

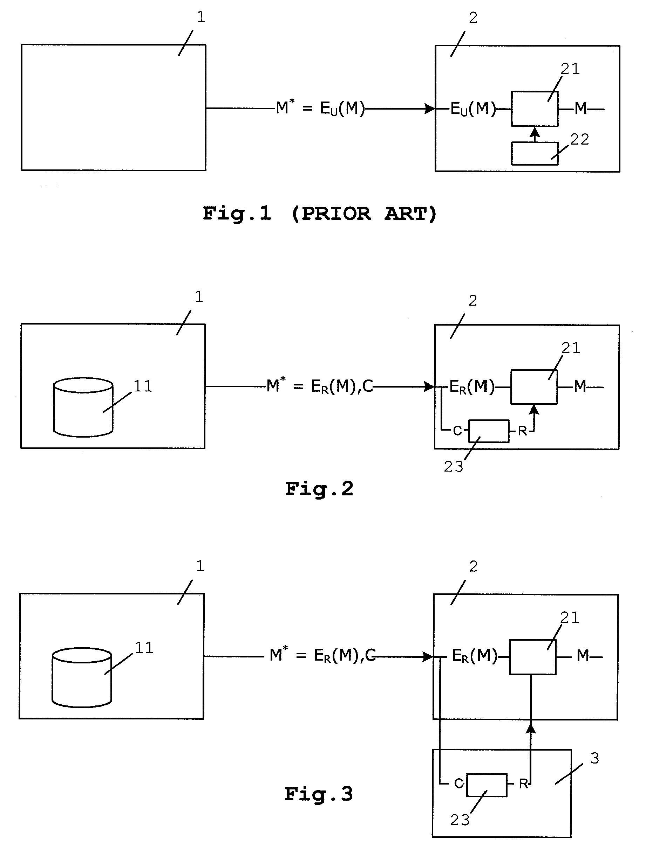

In known systems wherein messages are transmitted in encrypted form and comprising a transmitter and a plurality of receivers, such as digital broadcast networks, the transmitter often addresses messages to a single receiver. Apart from identifying the receiver, the transmitter needs to prevent the message from being processed by other receivers. Encryption with a secret receiver key allows the transmitter to ensure that only the targeted receiver will be able to decrypt and process the message. Fig.1 shows an example of such prior art implementation, wherein a message M is transmitted from a transmitter 1 to a receiver 2. In Fig.1 message M* is the encrypted version of message M using the unique receiver secret key U. After decryption of M* in decryptor 21 the message M is available for further processing. In order to prevent an attacker from producing exact copies of the receiver functionality, the unique secret key U is securely stored in a memory 22 of the receiver 2.

Nowadays, attackers are capable of reverse engineering an implementation of a receiver. Thereby they are able to obtain the unique secret key U and use it to generate copies of the receiver. These copies hide behind the identity of the legitimate receiver. Once detected, a typical recovery of such breach is to stop sending encrypted messages to the receiver with the compromised unique secret key. As reverse engineering of secured memory is becoming easier due to advances in attack technology, there is a need for a solution allowing encrypted messages being send to a single receiver and allowing only the single receiver to decrypt the message.

### SUMMARY OF THE INVENTION

It is an object of the invention to minimize the possibilities of cloning and reverse engineering of receivers of encrypted messages.

According to an aspect of the invention a system is proposed comprising a transmitter and a receiver. The transmitter is configured to encrypt a message using a crypto key in order to obtain an encrypted message. The transmitter is further configured to transmit the encrypted message to the receiver. The transmitter is further configured to transmit challenge data to the receiver. The receiver comprises a decoder. The receiver is configured to receive the encrypted message. The receiver is further configured to receive the challenge data. The receiver is further configured to obtain the crypto key from an integrated circuit chip comprising a physical unclonable function configured to generate the crypto key in response to the challenge data. The receiver is further configured to decrypt the encrypted message in the decryptor using the crypto key to obtain the message.

According to an aspect of the invention a method for use in a system is proposed. The method comprises the step encrypting in a transmitter a message using a crypto key to obtain an encrypted message. The method further comprises the step of transmitting the encrypted message from the transmitter to a receiver. The method further comprises the step of receiving in the receiver the encrypted message. The method further comprises the step of obtaining in the receiver the crypto key. The method further comprises the step of decrypting the encrypted message in a decryptor of the receiver using the crypto key to obtain the message. The method further comprises the step of transmitting challenge data from the transmitter to the receiver. The method further comprises the step of receiving in the receiver the challenge data. The step of obtaining in the receiver the crypto key comprises the step of providing the challenge data to an integrated circuit chip comprising a physical unclonable function. The step of obtaining the crypto key further comprises the step of generating in the physical unclonable function the crypto key in response to the challenge data. The step of obtaining the crypto key further comprises the step of providing the crypto key to the receiver.

According to an aspect of the invention a transmitter is provided for use in a system and having one or more of the above mentioned features.

According to an aspect of the invention a receiver is provided for use in a system and having one or more of the above mentioned features.

The system is e.g. a conditional access system, a DRM system, or any other system wherein messages are transmitted from a transmitter to a receiver in an encrypted form.

The physical unclonable function is a circuit built out of standard logic primitives used in semiconductor technology for the manufacturing of an integrated circuit chip. The function implemented by the physical unclonable function depends on the timing of the individual gates and wires. Due to inherent statistical variation in the manufacturing process, delays of gates and wires vary from chip to chip. The functionality of the physical unclonable function is such that a digital output is produced based on the relative delays of paths in the circuit of the physical unclonable function. Therefore, when inputs (challenges) are applied to the different chips, they produce different outputs (responses).

The responses to the challenges are typically predetermined after manufacturing of the PUF and stored in a database or memory of the transmitter. It is possible that a response to a challenge is determined for the first time when a message is to be encrypted. The challenge, which is then e.g. randomly generated data, is input to the PUF and the response is determined before encryption of the message. The thus determined response to the challenge can be used instead of predetermined values.

By making the obtainment of the crypto key for decryption of the decrypted message dependent on the physical unclonable function, the receivers in the system are advantageously substantially unclonable. Moreover, the output of the physical unclonable function (i.e. the crypto key) depends on the input (i.e. the challenge data) coming from the transmitter. This advantageously enables the system to switch to another crypto key without having to transmit the crypto key itself (either in clear text, encrypted or transformed) from the transmitter to the receiver. Consequently it becomes substantially impossible to intercept the crypto key for clonability purposes.

The embodiments of claims 2, 8 and 12 advantageously enable a headend system and integrated receiver/decoder to use the invention, wherein the physically integrated function is embedded in the integrated receiver/decoder.

The embodiments of claims 3, 13 and 14 advantageously enable a headend system, integrated receiver/decoder and smartcard to use the invention, wherein the physically integrated function is embedded in the smartcard.

The embodiments of claims 4 and 9 advantageously enable a smartcard and an integrated receiver/decoder to use the invention, wherein the physically integrated function is embedded in the integrated receiver/decoder, in the smartcard or in a further smartcard.

The embodiment of claim 7 advantageously enables a limited reuse of a crypto key and associated challenge data. This makes it possible to make use of a physical unclonable function that accepts only a limited number of challenges and thus can generate only a limited number of responses.

The embodiment of claim 10 advantageously enables the use of a software smartcard as transmitter, wherein the white-box implementation ensures that the crypto key cannot be derived.

The embodiment of claim 15 advantageously enables the response used for encryption of the message to be determined for the first time when the message is to be transmitted.

Hereinafter, embodiments of the invention will be described in further detail. It should be appreciated, however, that these embodiments may not be construed as limiting the scope of protection for the present invention.

### BRIEF DESCRIPTION OF THE DRAWINGS

Aspects of the invention will be explained in greater detail by reference to exemplary embodiments shown in the drawings, in which:
Fig.1 shows a prior art conditional access system;
Fig.2 shows a system of an exemplary embodiment of the invention;
Fig.3 shows a system of an exemplary embodiment of the invention;
Fig.4 shows a system of an exemplary embodiment of the invention;
Fig.5 shows a system of an exemplary embodiment of the invention; and
Fig.6 shows the steps of a method in a system of an exemplary embodiment of the invention.

### DETAILED DESCRIPTION OF THE DRAWINGS

Physical Unclonable Functions (PUFs) are known and correspond to fabricating a particular circuit on an integrated circuit chip, such as e.g. a silicon integrated circuit chip, to create a substantially unclonable identity for the chip. PUFs are typically used for identification or authentication applications.

A PUF is a circuit built out of standard logic primitives used in semiconductor technology. The inputs to the PUF are digital inputs (0/1) and the outputs are digital outputs (0/1). However, the function implemented by the PUF depends on the timing of the individual gates and wires. Circuits are fabricated onto silicon, or any other suitable material, by creating layout masks for the circuit. When the PUF is fabricated on many chips, e.g. by using the same set of layout masks for each chip, due to statistical variation in the manufacturing process, the delays of gates and wires vary from chip to chip. The PUF functionality is such that a digital output is produced based on the relative delays of paths in the PUF. Therefore, when inputs (challenges) are applied to the different chips, they produce different outputs (responses).

A PUF is typically used in challenge-response authentication. When a physical stimulus is applied to the PUF implementation, each instance of the PUF reacts in a unique way due to the presence of its random physical characteristics introduced by the manufacturing process. The applied stimulus is called the challenge, and the reaction of the PUF is called the response. A specific challenge and its corresponding response together form a challenge-response-pair (CRP).

PUFs are substantially unclonable due to the fact that each PUF has a unique and unpredictable set of manufacturing variations. Two PUFs that were manufactured with the same process will still possess a unique challenge-response behavior. Physical cloning of a PUF is very hard because exact control over the manufacturing process - such that all parameters of the physical structure can be exactly defined - is substantially impossible. This unclonability property ensures that it is very hard to construct a PUF with the same challenge-response behavior as another PUF. In addition, mathematical unclonability makes it very hard to compute an unknown response given the exact parameters or other CRPs from the PUF. This is because a response is created as a very complex interaction of the challenge with the random components. Modeling this interaction, even if the random values would be known, takes a lot of computational effort. Thus, due to mathematical unclonability it is extremely difficult to produce a software clone of the PUF.

The invention defines the use of a physically unclonable function (PUF) implemented in an integrated circuit chip for applications that need to operate in one way communication infrastructures such as broadcasting. The main challenge for such applications is to prevent the cloning of a receiver. The PUF replaces the secret key that is held in a secured storage in existing implementations in such network environments.

It will be understood that the invention is not limited to one way communication systems and can be used in two way communication systems, but the return path of the two way communication system is not required for the present invention.

Instead of encrypting a message to an individual receiver with its unique secret key, the invention enables the message to be encrypted with the response of the unique PUF in the receiver to a known challenge. The encrypted message in combination with the challenge is transmitted to the receiver. As only the unique PUF of the receiver is able to generate the appropriate response, no other receivers can decrypt the message. As the function result is preferably available for a very short time, the security of this approach is significantly better than the existing methods.

The hardware defining the PUF may not provide a reliable response to a challenge. For example fluctuations in temperature or other noise may result in an incorrect response to the challenge in e.g. 10% of the response generations. To compensate for such fluctuations the same challenge can be input to the PUF a number of times and the response value is determined based on a statistical evaluation of the responses as generated in response to the same challenges provided.

After the production of a PUF the reliability of the PUF can be determined by measuring the response to subsequently providing the same challenge. Challenges for which the PUF does not produce a reliable response can be rejected for further use.

The properties of the PUF introduced during the manufacturing process of the chip ensure that each receiver has a unique function that is very hard to copy. The solution relies on a set of CRP values that is recorded for a receiver implementing the PUF before its deployment.

An exemplary embodiment of the invention is shown in Fig.2. Message M* is transmitted from a transmitter 1 to a receiver 2. M* comprises an encrypted message M and a challenge C. The key R used to encrypt the message M is e.g. retrieved from a data storage 11, such as a database with challenge-response-pair (CRP) values, in the transmitter 1 and consists of response R associated with the transmitted challenge C for the intended receiver 2. No other receiver obtains the same response R when applying the challenge C to a PUF 23. Therefore the intended receiver 2 is the only device that can decrypt the message M*. Message M* is decrypted in decryptor 21 using the response R.

An attacker would need to copy the PUF 23 in order to produce a clone of the receiver 2, but, as a PUF 23 is unclonable by nature, this is - advantageously - not substantially possible. The attacker could observe the use of a CRP in a particular receiver 2 and use that information to create a copy of the receiver 2. But, as the response R is preferably available for a short period of time, such attack is very difficult compared to retrieving a secret key U from a secured memory 22 as known from the prior art and shown in Fig. 1.

Optionally the transmitter 1 can apply usage restrictions on the CRP. For example, a single use CRP restriction makes the observation of the response R useless for any future reception of a message M* to the single receiver 2.

The PUF 23 represents the unique identity of a subscriber in a broadcast environment. In contrast to known PUF implementations where the response to a challenge is sent back to the transmitter, in the present invention the challenge and response are used locally at the client device 2. Hereto, every uniquely addressed message M* - such as for example an entitlement management message (EMM) - contains a challenge C and an encrypted portion E_{R}(M) encrypted with a key R which corresponds to the response R of the PUF 23 to the supplied challenge C. After reception of the EMM M* from a headend 1 in the client device 2, the challenge C, which can be in the clear, is input to the PUF 23, and the response R to this challenge C coming from the PUF 23 is used as a key R to decrypt the encrypted portion E_{R}(M) of the message M* in decryptor 21.

In order to construct an EMM M*, the headend 1 has stored for each client device a number of CRPs. Typically these CRPs are recorded during personalization and uploaded to the headend system 1. The headend 1 inserts the challenge C in the clear in the EMM M* and a part or the rest of the content of the EMM is encrypted using a crypto-algorithm known per se and using the corresponding response value R as an encryption key.

It is possible to apply a single CRP to multiple messages M*. It is possible to switch to another CRP, e.g. when a breach is suspected.

The number of CRP values stored in the CRP database 11 and used by transmitter 1 is preferably sufficiently large to ensure that a potential attacker who is monitoring the PUF 23 behavior by recording the used challenges C and responses R will not obtain all CRP values in a time which is practical to setup a cloned piracy device without a PUF, i.e. by simulating the PUF using the obtained CRP values. The following example shows that this is feasible.

In this example an EMM M* containing a new group key is sent to a receiver 2 once every week. Each EMM M* uses a new CRP, thus one CRP is used per week. If the number of CRP values stored in the CRP database 11 is e.g. 520, an attacker can only obtain all CRP values in 520 weeks or 10 years, which makes it substantially impossible to obtain all CRP values in a time practical to setup a cloned piracy device.

The length of a single challenge value C and a single response value R is typically 16 bytes, which corresponds to a typical key length of a crypto algorithm. It will be understood that challenge data C and response data R can have any other data length. When storing 520 CRP values for a single receiver 2, the storage required is thus 16640 bytes per receiver 2. For e.g. a 10 million subscriber database this would amount to 166 Gigabytes of CRP data to be stored in the CRP database 11, which with today's storage capacity is very feasible.

An attacker might be able to illegally obtain the CRP database 11 stored in the headend 1. To mitigate this problem, optionally only a subset of the total CRP set can be uploaded to the headend 1 and stored in the CRP database 11. In the event the CRP database 11 would be illegally obtained, a new subset can be send from the personalization database to the operator's headend 1. The personalization database is preferably stored external to the headend 1. The subset stored in the CRP database 11 contains e.g. 1/10th of the total number of CRP values. At predefined time intervals or manually initiated a new subset is sent to the headend 1 overwriting the current CRP values in the CRP database 11. In case of e.g. updating the CRP database 11 once a year and the CRP database containing 1/10th of the total CRP values, it takes 10 years before CRP values are reused.

In the exemplary embodiment shown in Fig.2 the PUF 23 is implemented in the same receiver 2 also comprising decoder 21. Such receiver 2 is for example an integrated receiver/decoder (IRD) or set-top box. Preferably the PUF 23 and the decoder 21 are implemented in a single secure chip, ensuring that the response value R does not leave the chip and thus cannot be obtained by probing the output of the PUF 23.

In an exemplary embodiment a smartcard is used together with an IRD to receive entitlement control messages (ECMs) originating from a headend in the smartcard. The smartcard obtains one or more control words (CWs) from the ECM and transmits the CWs to the IRD. The IRD uses the CW to descramble data received from the headend. In this example the PUF is located in a secure chip of the IRD. The challenge response pairs are measured during chip manufacturing and stored in a personalization database, preferably external to the IRD, smartcard and headend. The headend receives one or more challenge-response-pairs for every chip. When the IRD is paired to the smartcard, the headend sends one or more CRPs to the smartcard in a secure manner known per se. The smartcard, which now corresponds to the transmitter 1 of Fig.2, securely stores both the challenge and the response, e.g. in a CRP database 11 or alternatively directly in a secured memory 11. Whenever a CW M is to be sent from the smartcard 1 to the IRD 2, the smartcard 1 encrypts the CW M with the response value R and sends the encrypted CW E_{R}(M) together with the challenge C to the receiver. Subsequently the IRD 2 uses the PUF 23 to derive the key R from challenge C and decrypt the encrypted CW E_{R}(M) with the derived key R.

In the exemplary embodiment shown in Fig.3, the PUF 23 is implemented on a smartcard 3 that is communicatively connected to a receiver device 2 comprising decoder 21. The response value R obtained from the PUF 23 is communicated to the decoder 21 using any known secure communication protocol between the smartcard 3 and the receiver device 2.

In Fig.3 transmitter 1 and smartcard 3 are two distinct devices. In case transmitter 1 is a smartcard, smartcard 3 and smartcard 1 are either two distinct smartcards or one and the same.

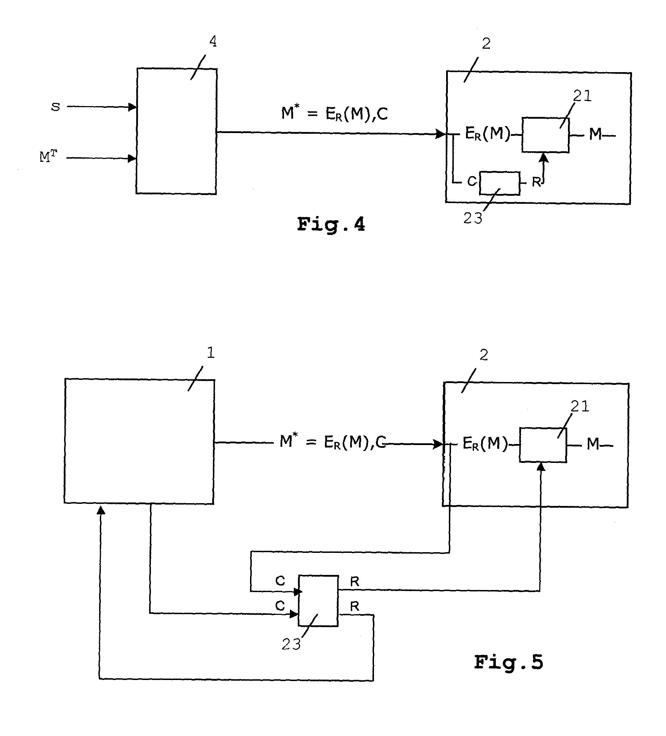

In the exemplary embodiment shown in Fig.4 the smartcard 1 of Fig.2 is implemented as a software module 4 using white-box encryption technology to obtain a CW from an external source and transmit the CW as an encrypted CW E_{R}(M) together with the value challenge value C to a receiver 2. Software smartcard 4 can be implemented in the receiver 2. Alternatively the software smartcard 4 is external to the receiver 2.

In the exemplary embodiment of Fig.4, at any moment in time the root of trust of the white-box encryption scheme comprises a preselected challenge-response pair of PUF 23. The preselected response R is underivably contained in the white-box encryption scheme of software smartcard 4 and is used to encrypt the CW in the last stage of the root of trust tree of the white-box encryption process.

In Fig.4 the PUF 23 is implemented in the receiver 2. It is possible to use the software smartcard 4 as shown in Fig.4 with a receiver 2 and smartcard 3 as shown in Fig.3, in which case the PUF 23 is located in the smartcard 3.

In operation, software smartcard 4 receives a transformed CW M^{T} and a seed s from a source external to the software smartcard 4, e.g. from a headend system and in the form of an ECM. The seed s can be in the form of a compound. The white-box encryption function uses seed s to perform a transformation on M^{T} and obtain the CW. In the same mathematical operation, the response value R is used in the whitebox encryption of the CW to obtain the encrypted CW E_{R}(M). Next, E_{R}(M) and challenge C are communicated to the receiver 2.

As in the exemplary embodiments of Fig.2 and Fig.3, in the exemplary embodiment of Fig.4 the CRP can be changed, e.g. pro-actively or in case the challenge-response pair is breached. Because the response R is embedded in the white-box encryption function, a portion of the white-box encryption function or the whole white-box encryption function is to be updated to effectuate the use of a new CRP. Hereto a software code comprising the update is transmitted from an external source, such as e.g. the headend, to the software smartcard 4. The update process itself uses any known mechanism.

In the previous examples the CRP is predetermined and stored in a CRP database or memory. It is possible that the CRP is determined for the first time when a message M is to be encrypted. A challenge, which is e.g. randomly generated data, is then input to the PUF and the response is determined before encryption of the message. The thus determined CRP can be used instead of a predetermined CRP stored in a CRP database. This alternative just-in-time generation of the CRP is particularly useful when the transmitter 1 and receiver 2 reside in a system consisting of a single apparatus.

Fig.5 shows an exemplary embodiment of the invention using just-in-time generation of a CRP. The system shown in Fig.5 is typically a single device, such as e.g. a smartcard, comprising a transmitter portion 1 and a receiver portion 2. The transmitter portion 1 generates a random data challenge and provides this random challenge to the PUF 23. The response R received from the PUF is used to encrypt message M. The encrypted message E_{R}(M) can be stored together with challenge data C in a memory of the system, such as e.g. a NVRAM (not shown), before transmission to receiver portion 2. To obtain the message M again, the encrypted message E_{R}(M) and challenge data C are provided to receiver portion 2, from where the challenge C is input to the PUF 23. The response R obtained from the PUF in response to the challenge C is used by decryptor 21 to decrypt the encrypted message and obtain the message M.

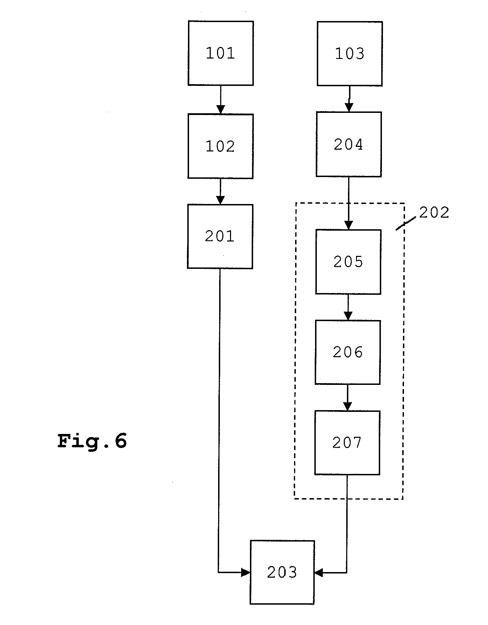

Fig.6 shows the steps of a method according to an exemplary embodiment of the invention. Transmitter 1 encrypts message M using encryption key R in step 101. The encrypted message E_{R}(M) and challenge data C are transmitted to the receiver 2 in steps 102 and 103, respectively. The receiver 2 receives the encrypted message E_{R}(M) and the challenge data C in steps 201 and 204, respectively. To enable decryption of the encrypted message E_{R}(M) the decryption key R is obtained in the receiver 2, which is shown in step 202. The decryption key R is obtained by providing the challenge data C to the integrated chip comprising the PUF 23, wherein the PUF 23 generates the decryption key R as a response to the challenge data C, as shown in steps 205 and 206. The generated decryption key R is provided in step 207 to the receiver 2, and more specifically to the decryptor 21 of the receiver 2, to allow the receiver 2 to decrypt the encrypted message E_{R}(M) and obtain message M.

The invention is not limited to the encryption of control words, but can be used to encrypt any data message M.

The encrypted message E_{R}(M) and compound C are typically communicated to a receiver 2 using a single message M*. Optionally, two messages are used to communicate the encrypted message E_{R}(M) and compound C.

The use of a PUF 23 according to the present invention can be applied to a wide range of unidirectional communication systems. The PUF 23 can e.g. be implemented such that it replaces a known key ladder in a descrambler of an IRD chip.

In the presented examples encryption functions are typically performed by an encryptor. The encryptor, and similarly decryptor 21, typically uses a processor and a memory to perform cryptographic functions in a manner known per se. The encryptor and/or decryptor are either implemented as a software module running on the processor or in hardware. Communication functionality for the transmission of messages M* from transmitter 1 to receiver 2 and for communication between receiver 2 and smartcard 3 is implemented in any known manner, e.g. through input/output (I/O) modules.

## Claims

1. A system comprising a transmitter (1) and a receiver (2), wherein the transmitter (1) is configured to:
encrypt a message (M) using a crypto key (R) to obtain an encrypted message (E_{R}(M)); and
transmit the encrypted message (E_{R}(M)) to the receiver (2),
wherein the receiver (2) comprises a decoder (21) and is configured to:
receive the encrypted message (E_{R}(M));
obtain the crypto key (R); and
decrypt the encrypted message (E_{R}(M)) in the decryptor (21) using the crypto key (R) to obtain the message (M),
wherein the transmitter (1) is further configured to transmit challenge data (C) to the receiver (2) and the receiver (2) is further configured to receive the challenge data (C),
and wherein the receiver is configured to obtain the crypto key (R) from an integrated circuit chip comprising a physical unclonable function (23) configured to generate the crypto key (R) in response to the challenge data (C).

2. The system according to claim 1, wherein the transmitter (1) is a headend system and the receiver (2) is an integrated receiver/decoder, and wherein the chip comprising the physical unclonable function (23) is a part of the receiver (2).

3. The system according to claim 1, wherein the transmitter (1) is a headend system and the receiver (2) is an integrated receiver/decoder, the system further comprising a smartcard (3) communicatively connected to the receiver (2), and wherein the chip comprising the physical unclonable function (23) is a part of the smartcard (3).

4. The system according to claim 1, wherein the transmitter (1) is a smartcard and the receiver (2) is an integrated receiver/decoder.

5. A method comprising the steps of:
encrypting in a transmitter (1) a message (M) using a crypto key (R) to obtain an encrypted message (E_{R}(M));
transmitting the encrypted message (E_{R}(M)) from the transmitter (1) to a receiver (2);
receiving in the receiver(2) the encrypted message (E_{R}(M));
obtaining in the receiver (2) the crypto key (R); and
decrypting the encrypted message (E_{R}(M)) in a decryptor (21) of the receiver (2) using the crypto key (R) to obtain the message (M),
the method further comprising the steps of:
transmitting challenge data (C) from the transmitter (1) to the receiver (2); and
receiving in the receiver (2) the challenge data (C), and wherein the step of obtaining in the receiver (2) the crypto key (R) comprises the steps of:
providing the challenge data (C) to an integrated circuit chip comprising a physical unclonable function (23);
generating in the physical unclonable function (23) the crypto key (R) in response to the challenge data (C); and
providing the crypto key (R) to the receiver (2).

6. A transmitter (1) configured to:
encrypt a message (M) using a crypto key (R) to obtain an encrypted message (E_{R}(M));
transmit the encrypted message (E_{R}(M)) to a receiver (2) ;
transmit challenge data (C) to the receiver (2) to allow the receiver (2) to obtain the crypto key (R) from an integrated circuit chip comprising a physical unclonable function (23) configured to generate the crypto key (R) in response to the challenge data (C).

7. The transmitter (1) according to claim 6, comprising a memory for storing one or more crypto keys (R) each uniquely associated with challenge data (C), wherein the transmitter (1) is configured to read the crypto key (R) from the memory for encryption of the message (M) and to read the associated challenge data (C) from the memory for transmission to the receiver (2), and wherein the transmitter (1) is further configured to reuse a single crypto key (R) and associated challenge data (C) for encryption of a further message by allowing the single crypto key (R) and associated challenge data (C) to be used a predefined number of times or during a predefined time period.

8. The transmitter (1) according to claim 6 or claim 7, wherein the transmitter (1) is a headend system and the receiver (2) is an integrated receiver/decoder.

9. The transmitter (1) according to claim 6 or claim 7, wherein the transmitter (1) is a smartcard and the receiver (2) is an integrated receiver/decoder.

10. The transmitter (1) according to claim 9, wherein the transmitter (1) is a software smartcard comprising white-box encryption code, wherein the crypto key (R) and associated challenge data (C) are underivably embedded in the white-box encryption code, and wherein the transmitter (1) is configured to:
receive a transformed message (M^{T}) and a seed (s); and
obtain the encrypted message (E_{R}(M)) from the transformed message (M^{T}) and the seed (s) using the white-box encryption code and embedded crypto key (R).

11. A receiver (2) comprising a decryptor (21) and being configured to:
receive an encrypted message (E_{R}(M)) from a transmitter (1);
receive challenge data (C) from the transmitter (1);
obtain a crypto key (R) from an integrated circuit chip comprising a physical unclonable function (23) configured to generate the crypto key (R) in response to the challenge data (C); and
decrypt the encrypted message (E_{R}(M)) in the decryptor (21) using the crypto key (R) to obtain the message (M).

12. The receiver (2) according to claim 11, wherein the receiver (2) is an integrated receiver/decoder, and wherein the chip comprising the physical unclonable function (23) is a part of the receiver (2).

13. The receiver (2) according to claim 11, wherein the receiver (2) is an integrated receiver/decoder, wherein the receiver (2) is communicatively connected to a smartcard (3), and wherein the chip comprising the physical unclonable function (23) is a part of the smartcard (3).

14. A smartcard (3) comprising an integrated circuit chip comprising a physical unclonable function (23), the smartcard (3) being configured to:
receive challenge data (C) from an integrated receiver/decoder (2);
provide the challenge data (C) to the physical unclonable function (23);
obtain a crypto key (R) from the physical unclonable function (23) in response to the challenge data (C); and
transmit the crypto key (R) to the integrated receiver/decoder (2).

15. The system according to claim 1, wherein the system is a single device and wherein the system is further configured to generate the challenge data (C) and to obtain the crypto key (R) for encrypting the message (M) from the integrated circuit chip comprising the physical unclonable function (23) configured to generate the crypto key (R) in response to the challenge data (C).
